# EUROPEAN PATENT APPLICATION

(11) **EP 2 199 062 A1**
(43) Date of publication of application: **23.06.2010**
(21) Application number: 08254102.0
(22) Date of filing: 22.12.2008
(51) Int. Cl.: B29C 59/04, B60R 21/235

(54) **Fabric for use in the manufacture of inflatable airbags, and a related method**

(71) Applicant: Autoliv Development AB, 44783 Vårgårda (SE)
(72) Inventor: Kismir, Altay, Windsor, Ontario, N8R 2E6 (CA); Winzinger, Will, Windsor, Ontario, N8W 2T5 (CA); Alves, Goncalo, Chatham, Ontario, N7L 5N6 (CA); Koehnen, Ralf, Congleton, Cheshire, CW12 4FJ (GB); Finn, Hugh, Culcheth, Cheshire, WA3 4LG (GB); Wootton, Gary, Stoke-on-Trent, Staffordshire, ST7 3PH (GB); Stow, David, 41678 Gothenburg (SE)
(74) Representative: Beattie, Alex Thomas Stewart

(57) **Abstract**

A fabric (6) is disclosed which is suitable for use in the manufacture of an inflatable airbag. The fabric has a surface coating (9) of an elastomeric material and is characterised by the provision of a relief pattern (10) embossed in said coating. A method of processing an airbag fabric (6) is also disclosed, which comprises the steps of i) coating (13) the fabric (6) with an elastomeric material in liquid phase, and ii) at least partially curing (17, 21) the elastomeric material. The method is further characterised by the step of iii) embossing a relief pattern (10) in said elastomeric material whilst the material is partially cured.

## Description

The present invention relates to a fabric for use in the manufacture of an inflatable airbag. The invention also relates to a method of processing fabric for use in the manufacture of an inflatable airbag, and to an airbag made from such fabric.

Many types of inflatable airbags have been proposed previously for use as safety devices in motor vehicles in order to provide protection for an occupant of a vehicle in the event that an accident should occur. A typical airbag is inflated in response to a signal from a sensor configured to sense an actual or impending accident situation. The airbag is inflated rapidly to form an inflated cushion in order to restrain an occupant within the vehicle. Airbags have also been proposed to provide protection for pedestrians in the event of being struck by a motor vehicle.

Airbags are typically made from woven fabric, the fabric having a surface coating, such as an elastomeric coating, in order to make the fabric substantially impermeable to gases and particles, and also to provide flame resistance properties to the basic strength-bearing fabric. Typical airbags using coated fabric in use today are produced by simultaneously weaving two layers of fabric, the yarns of the two layers being interwoven in order to combine the two fabrics in selected areas thereby defining a seam. Airbags of this construction are generally known as "one-piece woven" airbags and are produced in accordance with a method generally similar to that proposed in WO90/09295.

As will be appreciated, inflatable airbags of the general type described above are tightly packed, for example by rolling and/or folding, into airbag modules which are installed in a motor vehicle. It is imperative that the airbag deploys reliably and correctly in the event of an accident situation by unfolding cleanly from its initial packed configuration. However, it has been found that the application of surface coatings of the type described above increases the surface friction of the fabric which is disadvantageous because increased surface friction can impede swift unfolding of an initially tightly packed airbag during deployment. It has been found that the surface friction of the airbag fabric increases substantially exponentially with increasing thickness of the surface coating and so the aforementioned deployment problems associated with high levels of surface friction are particularly prevalent in airbags intended to remain inflated for a relatively long period of time such as airbags configured to provide protection to vehicle occupants in the event of roll over accident situations. Airbags of this type need a relatively thick surface coating in order to prevent the leakage of inflating gas for the relatively long period of time for which the airbag must remain substantially fully inflated.

In order to address the above mentioned problems associated with relatively high surface friction of coated airbag fabrics, it has therefore been proposed to apply an additional layer of dry lubricant such as talc in order to ensure that adjacent folds of a packed airbag move sufficiently relative to one another during deployment of the airbag, and also to ensure the fabric of the airbag does not stick to internal surfaces of the motor vehicle such as internal trim surfaces or windows, thereby ensuring correct deployment of the air bag.

However, the additional step of applying the talc coating adds expense to the fabric manufacturing process, and also adds weight and bulk to the fabric, thereby increasing the size and weight of the packed airbag within the airbag module.

It is therefore an object of the present invention to provide an improved fabric suitable for use in the manufacture of an inflatable airbag.

It is another object of the present invention to provide an improved method for processing fabric for use in the manufacture of an inflatable airbag.

It is a further object of the present invention to provide an improved airbag.

Accordingly, a first aspect of the present invention provides a fabric for use in the manufacture of an inflatable airbag, the fabric having a surface coating of an elastomeric material and being characterised by the provision of a relief pattern embossed in said coating.

Preferably, the relief pattern comprises a repeating pattern of dimples and/or projections.

Conveniently, the elastomeric material comprises silicone.

Alternatively, the elastomeric material comprises polyurethane.

According to another aspect of the present invention, there is provided an inflatable airbag made from fabric of the type defined above.

According to a further aspect of the present invention, there is provided a method of processing a fabric for use in the manufacture of an inflatable airbag, the method comprising the steps of i) applying a coating of elastomeric material to a surface of the fabric, and ii) at least partially curing the elastomeric material, wherein the method is characterised by the further step of iii) embossing a relief pattern in said elastomeric material whilst the material is partially cured.

Preferably said applying step involves applying the elastomeric material to the fabric in liquid phase.

Conveniently, said embossing step involves passing the coated fabric between at least one pair of calender rolls.

Optionally, at least one roll of the or each said pair of calender rolls has a contoured roll surface configured to at least partially define said pattern.

Preferably, said embossing step involves passing the coated fabric between a single pair of calender rolls, and wherein one of said rolls has a contoured roll surface configured to define said pattern in its entirety.

Advantageously, said applying step involves laminating a layer of said elastomeric material to said fabric.

Conveniently, said relief pattern is embossed in said elastomeric material during said laminating step.

Alternatively, said relief pattern is embossed in said elastomeric material prior to said laminating step.

The relief pattern may be embossed in said elastomeric material after said laminating step.

As will be appreciated, in the event that said relief pattern is created substantially during, or after, said laminating step, then said embossing step may involve passing the fabric and elastomeric layer between at least one pair of calender rolls. Optionally, at least one roll of the or each said pair of calender rolls has a contoured roll surface configured to at least partially define said pattern.

Preferably, said embossing step involves passing the fabric and the elastomeric layer between a single pair of calender rolls, and wherein one of said rolls has a contoured roll surface configured to define said pattern in its entirety.

Preferably said relief pattern comprises a repeating pattern of dimples and/or projections.

Advantageously, said embossing step is carried out within a curing oven.

Advantageously, said elastomeric material comprises silicone.

Conveniently, said elastomeric material comprises polyurethane.

According to another aspect of the present invention, there is provided a fabric processed in accordance with the method defined above. Another aspect of the present invention provides an inflatable airbag made from said fabric.

So that the invention may be more readily understood, and so that further features thereof may be appreciated, embodiments of the invention will now be described by way of example with reference to the accompanying drawings in which:
Figure 1 is a schematic cross-section showing a woven fabric with a relatively thin surface coating;
Figure 2 is a view corresponding generally to that of figure 1, but showing a fabric with a relatively thick surface coating;
Figure 3 is a view corresponding generally to that of figure 2, showing a fabric in accordance with an embodiment of the invention, in which the surface coating has an embossed relief pattern;
Figure 4 shows the relief pattern, as viewed normal to the fabric;
Figure 5 is a schematic illustration showing a fabric processing method in accordance with an embodiment of the present invention; and
Figure 6 is a schematic illustration showing a fabric processing method in accordance with another embodiment of the present invention.

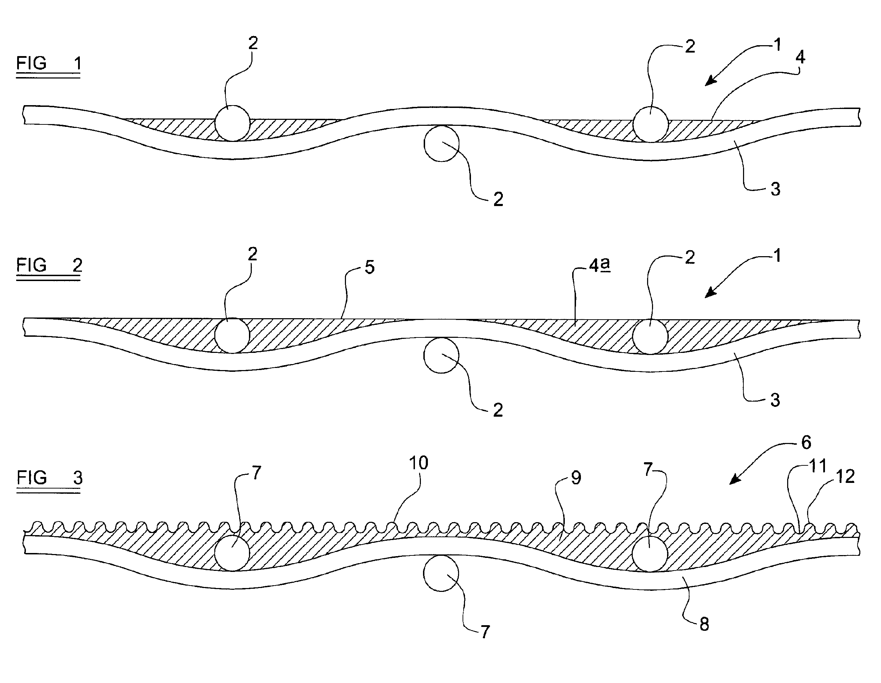

Referring now in more detail to figure 1, there is illustrated an enlarged sectional view illustrating a sheet of fabric 1. As is conventional, the fabric comprises a plurality of warp yarns 2 which are interwoven with a plurality of weft yarns 3 (only one weft yarn being illustrated in figure 1). The fabric 1 illustrated in figure 1 is provided with a surface coating 4 which can comprise, for example, a silicon-based material or a polyurethane-based material. The surface coating 4 has been applied to one side of the fabric 1 so as to have a relatively thin thickness which, as is illustrated, is sufficient to partially fill the spaces between adjacent yarns but which is not sufficiently thick to entirely cover the underlying warp and weft yarns. The fabric 1 thus retains a degree of texture arising from the inherent weave of the constituent warp yarns 2 and weft yarns 3.

Figure 2 is a view corresponding generally to that of figure 1, but illustrates the fabric with the thicker surface coating 4a applied to its surface. As can been seen, particularly in comparison to figure 1, the thickness of the surface coating 4a is sufficient to substantially completely cover the underlying warp and weft yarns 2, 3, the surface coating 4a thus presenting a substantially smooth upper surface 5 devoid of any texture arising from the weave of the underlying yarns.

It has been found that in order to provide sufficient impermeability to gas and particles, airbag fabrics often need to be treated with surface coatings 4a whose thickness is generally similar to that illustrated in Figure 2. This is particularly the case with airbags intended to provide protection to the occupants of a motor vehicle in the event of a roll over accident, which must remain inflated for a relatively long period of time when compared to front-impact or side-impact airbags. However, the resulting smooth surface 5 serves to increase the contact area between adjacent folds of the airbag when the airbag is initially packed, thereby increasing the surface friction of the coated material relative to that illustrated in figure 1 in which the surface of the material maintains a degree of texture which is effective to reduce the contact area between adjacent folds. The fabric illustrated in figure 2, having the relatively thick coating, is thus more likely to suffer from the aforementioned disadvantages associated with high surface friction than the fabric illustrated in figure 1 which has the relatively thin surface coating 4.

Turning now to consider figure 3, there is illustrated a sheet of fabric 6 in accordance with an aspect of the present invention, which again comprises a plurality of warp yarns 7 interwoven with a plurality of weft yarns 8 (only one weft yarn being illustrated in figure 3). The fabric 6 illustrated in figure 3 has a surface coating 9, which may be formed from a silicon-based material or from a polyurethane-based material. As will be evident by a comparison of figure 3 with figures 2 and 1, the surface coating 9 has a thickness comparable to that of the relatively thick surface coating 4a illustrated in figure 2. The surface coating 9 may thus have a thickness sufficient to substantially cover the underlying warp and weft yarns 7, 8, or at least sufficient to achieve the desired level of impermeability. However, the upper surface 10 of the surface coating 9 has a textured configuration, which may comprise a plurality of dimples 11 and/or projections 12 formed on the surface of the coating 9. The textured upper surface 10 is thus provided with a relief pattern, as defined by the dimples and projections, and as will be explained in more detail this relief pattern is embossed in the upper surface of the coating 9.

As will thus be appreciated, the coated fabric illustrated in figure 3 thus benefits from a relatively thick surface coating 9 which provides good levels of impermeability (for example, generally comparable to the coated fabric illustrated in figure 2) but which still benefits from a textured surface which is effective to reduce the contact area between adjacent folds in the fabric when the airbag is initially tightly packed in an airbag module. The fabric in accordance with the present invention, as illustrated in figure 3, thus combines the benefits of the arrangements illustrated in figures 1 and 2 by providing good levels of gas impermeability with relatively low levels of surface friction which are important to ensure reliable deployment of the airbag.

As will therefore be appreciated, whilst a coated fabric having a relatively thick coating 4a with a smooth upper surface 5, as illustrated in figure 2, must generally be provided with an additional coating of talc or the like in order to reduce the otherwise high surface friction, the arrangement of figure 3 obviates the need for an additional low friction coating by virtue of the embossed relief pattern defining the textured upper surface 10.

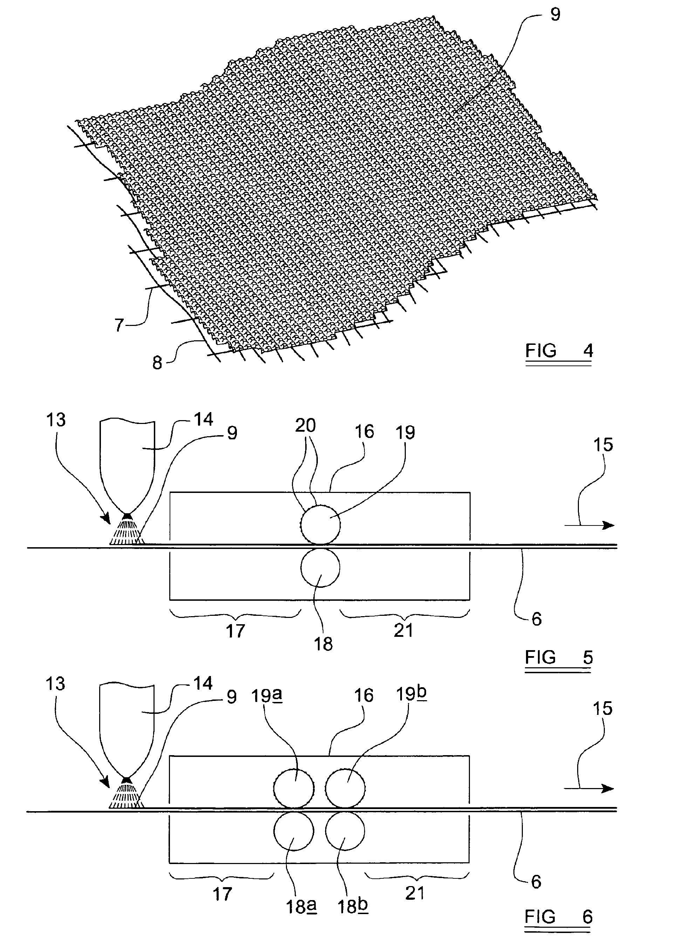

Figure 4 illustrates a typical relief pattern embossed into the surface coating 9, which may, for example, comprise a repeating regular pattern of dimples and/or projections.

Figure 5 is a schematic illustration showing a method of processing the fabric 6 in accordance with the present invention, ready for use in the manufacture of an inflatable airbag. The woven fabric 6 is initially coated with an elastomeric material, such as silicone-based elastomer or polyurethane-based elastomer, as illustrated schematically at 13. The elastomeric material is applied in the liquid phase, for example as a spray produced by one or more spray nozzles 14, below which the woven fabric 6 is conveyed in the direction illustrated by arrow 15. The coating 9 is applied so as to have a thickness sufficient to provide appropriate impermeability to inflating gas and particles and the fabric, together with the liquid-phase coating is then conveyed through a curing oven 16 in order to cure the elastomeric material applied to the surface of the fabric. As the fabric 6 is drawn through a first region 17 of the oven 16, the elastomeric material is partially cured to such a degree that the coating is no longer wet, but nevertheless is not fully cured. After the initial partial curing stage 17, the coated fabric is drawn through the nip between a pair of calender rolls 18, 19.

The lower roll 18 serves as a backing roll and has an outer layer of compressible material such as fibrous material. The upper roll 19 is preferably made from substantially rigid material such as steel and is configured such that its outer surface is contoured, as indicated generally at 20. The calender rolls 18, 19 serve to apply compressive pressure to the coated fabric passing between them, thereby embossing the coating with a relief pattern defined by the contoured surface 20 of the upper roll 19.

Upon exiting the embossing calender rolls 18, 19 the coated fabric then passes through a subsequent curing stage 21 effective to further cure the embossed coating, thereby fixing the relief pattern. The coated fabric 6 then exits the curing oven 16 and may be wound onto a roll for subsequent transport to an airbag manufacturing site.

The method described above and illustrated in figure 5 involves the use of single pair of embossing calender rolls 18, 19, and so in this arrangement the upper roll 19 has a contoured surface which is configured to define the relief pattern embossed in the surface coating in its entirety. However, in contrast, figure 6 illustrates a similar method in which two pairs of successive calender rolls 18a, 19a and 18b, 19b are used in order to emboss the relief pattern into the surface coating. In this arrangement, it is possible for each of the two upper calender rolls 19a, 19b to have a respective contoured roll surface configured to only partially define the relief pattern to be embossed in the surface coating. For example, the first pair of calender roles 18a, 19a could thus be configured to emboss a first characteristic of the pattern, whilst the second pair of calender rolls 18b, 19b may be configured to emboss a second characteristic of the pattern, the two pairs of rolls thus working in concert to define the complete relief pattern.

Whilst the method of the invention has been described above with reference to specific embodiments incorporating the use of one or more pairs of calender rolls, it is to be appreciated that the embossed relief pattern could alternatively be created by other means. For example, the relief pattern could be embossed using a reciprocating stamp mechanism or the like.

Also, whilst the invention has been described above with particular reference to embodiments in which the relief pattern is embossed in a coating applied to the surface of the fabric in liquid phase, it is also envisaged that the invention could be embodied by embossing the relief pattern in a thin film-type layer of elastomeric material which is laminated to the fabric. The pattern could be embossed in the layer of elastomeric material either prior to the layer being laminated to the fabric, during said lamination, or after said lamination.

When used in this specification and claims, the terms "comprises" and "comprising" and variations thereof mean that the specified features, steps or integers are included. The terms are not to be interpreted to exclude the presence of other features, steps or components.

The features disclosed in the foregoing description, or in the following claims, or in the accompanying drawings, expressed in their specific forms or in terms of a means for performing the disclosed function, or a method or process for obtaining the disclosed results, as appropriate, may, separately, or in any combination of such features, be utilised for realising the invention in diverse forms thereof

While the invention has been described in conjunction with the exemplary embodiments described above, many equivalent modifications and variations will be apparent to those skilled in the art when given this disclosure. Accordingly, the exemplary embodiments of the invention set forth above are considered to be illustrative and not limiting. Various changes to the described embodiments may be made without departing from the spirit and scope of the invention.

## Claims

1. A fabric (6) for use in the manufacture of an inflatable airbag, the fabric having a surface coating (9) of an elastomeric material and being **characterised by** the provision of a relief pattern (10) embossed in said coating (9).

2. A fabric according to claim 1, wherein the relief pattern (10) comprises a repeating pattern of dimples (11) and/or projections (12).

3. A fabric according to claim 1 or claim 2, wherein the elastomeric material comprises silicone.

4. A fabric according to claim 1 or claim 2, wherein the elastomeric material comprises polyurethane.

5. An inflatable airbag made from fabric (6) according to any one of claims 1 to 5.

6. A method of processing a fabric (6) for use in the manufacture of an inflatable airbag, the method comprising the steps of i) applying a coating (13) of elastomeric material to a surface of the fabric (6), and ii) at least partially curing (17, 21) the elastomeric material, wherein the method is **characterised by** the further step of iii) embossing a relief pattern (10) in said elastomeric material whilst the material is partially cured.

7. A method according to claim 6, wherein said applying step involves applying the elastomeric material to the fabric in liquid phase.

8. A method according to claim 7, wherein said embossing step involves passing the coated fabric between at least one pair of calender rolls (18, 19).

9. A method according to claim 8, wherein at least one roll (19a, 19b) of the or each said pair of calender rolls has a contoured roll surface (20) configured to at least partially define said pattern (10).

10. A method according to claim 9, wherein said embossing step involves passing the coated fabric (6) between a single pair of calender rolls (18, 19), and wherein one of said rolls (19) has a contoured roll surface (20) configured to define said pattern (10) in its entirety.

11. A method according to claim 6, wherein said applying step involves laminating a layer of said elastomeric material to said fabric (6).

12. A method according to claim 11, wherein said relief pattern (10) is embossed in said elastomeric material prior to said laminating step.

13. A method according to claim 11, wherein said relief pattern (10) is embossed in said elastomeric material during said laminating step.

14. A method according to claim 11, wherein said relief pattern (10) is embossed in said elastomeric material after said laminating step.

15. A method according to any one of claims 6 to 14, wherein said relief pattern (10) comprises a repeating pattern of dimples (11) and/or projections (12).

16. A method according to any one of claims 6 to 15, wherein said embossing step is carried out within a curing oven (16).

17. A method according to any one of claims 6 to 116, wherein said elastomeric material comprises silicone.

18. A method according to any one of claims 6 to 16, wherein said elastomeric material comprises polyurethane.

19. A fabric (6) processed in accordance with the method of any one of claims 6 to 18.

20. An inflatable airbag made from fabric (6) according to claim 19.
